# EUROPÄISCHE PATENTSCHRIFT

(11) **EP 4 260 091 B1**
(45) Veröffentlichungstag und Bekanntmachung des Hinweises auf die Patenterteilung: **05.11.2025**
(21) Anmeldenummer: 21824329.3
(22) Anmeldetag: 01.12.2021
(51) Int. Cl.: G01S 7/521, G01S 15/931, G10K 9/18, G10K 11/02, G10K 11/24

(54) **ULTRASCHALLSENSORANORDNUNG FÜR EIN KRAFTFAHRZEUG UND KRAFTFAHRZEUG**
ULTRASONIC SENSOR ASSEMBLY FOR A MOTOR VEHICLE, AND MOTOR VEHICLE
ENSEMBLE CAPTEUR À ULTRASONS DESTINÉ À UN VÉHICULE AUTOMOBILE ET VÉHICULE AUTOMOBILE

(30) Priorität: 08.12.2020 DE 102020132623
(43) Veröffentlichungstag der Anmeldung: 18.10.2023
(73) Patentinhaber: Valeo Schalter und Sensoren GmbH, 74321 Bietigheim-Bissingen (DE)
(72) Erfinder: SALOMON, Sylvio, 74321 Bietigheim-Bissingen (DE)
(74) Vertreter: Pothmann, Karsten
(86) Internationale Anmeldenummer: PCT/EP2021/083689
(87) Internationale Veröffentlichungsnummer: WO 2022/122494

(56) Entgegenhaltungen:
- DE-A1- 102011 121 095
- D'AGUANNO G. ET AL: "Broadband metamaterial for nonresonant matching of acoustic waves", SCIENTIFIC REPORTS, vol. 2, no. 1, 28 March 2012 (2012-03-28), XP055903064, DOI: 10.1038/srep00340

## Beschreibung

Die vorliegende Erfindung betrifft das Gebiet der Ultraschallsensorik für Kraftfahrzeuge und spezieller eine Ultraschallsensoranordnung für ein Kraftfahrzeug und ein Kraftfahrzeug.

Bekannt sind Ultraschallsensoren mit einem Gehäuse, einer von dem Gehäuse mechanisch entkoppelten Ultraschallmembran und einem Schallwandlerelement zur Schwingungsanregung und Schwingungserfassung der Ultraschallmembran.

Ein derartiger Ultraschallsensor kann zur Messung einer Distanz zu einem Objekt im Kraftfahrzeugumfeld oder zu einem Objekt im Innenraum des Fahrzeugs nach dem Puls-Echo-Verfahren verwendet werden. Dabei sendet die Ultraschallmembran, angeregt von dem Schallwandlerelement, Energie in Form eines Ultraschallsignals aus. Sodann erfasst das Schallwandlerelement Schwingungen der Ultraschallmembran, die von einem aus dem Kraftfahrzeugumfeld oder dem Innenraum zurücklaufenden Echosignal herrühren. Anhand der Signallaufzeit wird die Distanz zu dem Objekt bestimmt. Derartige Messungen werden beispielsweise von einem Parkassistenzsystem des Kraftfahrzeugs verwendet.

Wünschenswert ist eine kurze Blindzeit des Ultraschallsensors nach Aussenden des Ultraschallsignals, ein geringes Grundrauschen und ein hohes Signal-Rausch-Verhältnis. Anders ausgedrückt sind hohe Amplituden des gemessen zurücklaufenden Echosignals und geringe Strukturschwingungen des Gehäuses und ggf. weiterer Bauelemente gewünscht.

Herkömmlich wird ein Ultraschallsensor daher vorzugsweise unverdeckt angeordnet, ohne dass zwischen Ultraschallmembran und zu messendem Kraftfahrzeugumfeld bzw. Innenraum ein weiteres Bauelement angeordnet ist. Sofern ein verdeckter Einbau beispielsweise hinter der Fahrzeugaußenhaut gewünscht ist, werden Maßnahmen zur Verringerung des Körperschalls der verdeckenden Bauelemente getroffen, wie das Anordnen von Dämpfungselementen an dem verdeckenden Bauelement.

Die DE102010044998A1 lehrt einen Stoßfänger mit einer Aussparung zur Ultraschalldetektion durch die Aussparung hindurch, wobei die Aussparung mit einer flexiblen Folie abgedeckt ist, die die Detektionsfunktion des Sensors nicht beeinträchtigt. Die Folie koppelt den Ultraschallsensor an die Fahrzeugaußenhaut.

Die DE 102012208059 A1 lehrt eine Sensoranordnung mit einer in einen Stoßfänger integrierten Sensoreinheit, wobei die Membran durch den Stoßfänger selbst gebildet wird.

Die DE 102015113195 A1 lehrt, dass verdeckt hinter einem Verkleidungsteil in einem ersten Bereich des Verkleidungsteils ein Ultraschallsensor angeordnet ist. Der erste Bereich des Verkleidungsteils und die Membran des Ultraschallsensors sind mechanisch derart gekoppelt, dass das reflektierte Ultraschallsignal die Membran und das Verkleidungsteil zu mechanischen Schwingungen anregt. In einem zweiten Bereich des Verkleidungsteils, der den ersten Bereich umgibt, sind mehrere Durchgangsöffnungen angeordnet, um die Schwingungen des Verkleidungsteils zu dämpfen.

Die DE 102017209823 A1 lehrt einen Ultraschallsensor, dessen Schwingungsmembran als akustisches Metamaterial ausgebildet ist, welches innerhalb eines Frequenzbandes der Membran resonantes Verhalten aufweist.

Die US 2017059697 A1 lehrt eine Anordnung, bei der ein Ultraschallsensor verdeckt hinter einer Innenseite eines Formteils angeordnet und dafür vorgesehen ist, Objekte auf der Außenseite des Formteils zu erfassen. Eine Vorspannstruktur presst den Ultraschallsensor gegen die Innenseite des Formteils, wobei ein Koppelelement zwischen Ultraschallsensor und Innenfläche angeordnet ist. In einem Bereich außerhalb des Koppelelements ist an der Innenseite des Formteils ein Dämpfungsmaterial angebracht.

Die DE 102011121095 A1 lehrt die Verwendung von phononischen Kristallen (Kolloidkristallen) vor Ultraschallsensoren zur Absorption oder als Linse.

Vor diesem Hintergrund liegt der vorliegenden Erfindung als Aufgabe zugrunde, eine verbesserte Ultraschallsensoranordnung für ein Fahrzeug und ein verbessertes Kraftfahrzeug bereitzustellen.

Die Erfinder der vorliegenden Anmeldung haben den Gedanken entwickelt, dass die Verwendung eines breitbandigen Metamaterials zur nichtresonanten Impedanzangleichung, wie es in G. D. Aguanno et. al. "Broadband metamaterial for nonresonant matching of acoustic waves", Sci. Rep. 2, 340: DOI:10.1038/srep003401 (2012), abgerufen am 21.10.2020 unter https://www.ncbi.nlm.nih.gov/pmc/articles/PMC3314304/?tool=pmcentrez, für medizinische diagnostische Zwecke und andere mikromechanische Systeme beschrieben wird, auch im Bereich der Ultraschallmessung eines Kraftfahrzeugumfelds oder -innenraums Vorteile bieten könnte, und sind durch weitere Überlegungen und Experimente schließlich zu der nachstehend beschriebenen Lösung gelangt.

Gemäß Anspruch 1 wird eine Ultraschallsensoranordnung für ein Kraftfahrzeug vorgeschlagen, die umfasst: einen Ultraschallsensor mit einem Gehäuse, einer von dem Gehäuse mechanisch entkoppelten Ultraschallmembran und einem Schallwandlerelement zur Schwingungsanregung und Schwingungserfassung der Ultraschallmembran; und einen vor der Ultraschallmembran angeordneten Blendenabschnitt aus einem akustischen Metamaterial, wobei das akustische Metamaterial aus einem schallharten Grundmaterial ausgebildet ist, in dem ein Gitter aus mehreren Durchgangsöffnungen ausgebildet ist.

Die Erfinder haben auf experimentellem Wege den überraschenden Effekt ermittelt, dass sich durch das vor der Ultraschallmembran angeordnete akustische Metamaterial die Amplitude des gemessenen Signals, das der reflektierten Ultraschallwelle entspricht, gegenüber einem unverdeckt angeordneten Ultraschallsensor nicht nur nicht verringert, sondern deutlich erhöht. Somit kann der Signal-Rausch-Abstand wesentlich verbessert werden. Gleichzeitig kann vorteilhafterweise der Blendenabschnitt den Ultraschallsensor optisch und mechanisch verdecken und dadurch beispielsweise vor Blicken und vor der Einwirkung von Stößen und dergleichen schützen.

Der Blendenabschnitt ist insbesondere derart vor der Ultraschallmembran angeordnet, dass er die Ultraschallmembran verdeckt. Unter "verdeckt" ist zu verstehen, dass von der Ultraschallmembran in einen zu messenden Raumbereich (Kraftfahrzeugumgebung oder Kraftfahrzeuginnenraum) ausgesendete Ultraschallwellen und von dort zurück zur Ultraschallmembran reflektierte Ultraschallwellen jeweils durch den Blendenabschnitt hindurchtreten. Unter "unverdeckt" ist zu verstehen, dass Ultraschallwellen ungehindert in den zu messenden Raumbereich ausgesendet und aus diesem zurück reflektiert werden können, d. h., dass sich nur Luft zwischen Ultraschallmembran und zu messendem Objekt in dem zu messenden Raumbereich befindet.

Die Ultraschallmembran kann beispielsweise mittels eines Entkopplungsrings aus einem schallweichen Material, wie etwa Silikon akustisch von dem Gehäuse des Ultraschallsensors entkoppelt sein. Die Ultraschallmembran kann in eine Öffnung des Gehäuses eingesetzt sein, wobei der Entkopplungsring zwischen der Ultraschallmembran und dem Gehäuseinnenrand der Öffnung angeordnet ist.

Das Schallwandlerelement kann ein Schallwandlerelement auf mechanisch-induktiver, mechanisch-kapazitiver, mechanisch-resistiver, magnetostriktiver oder elektrostriktiver Grundlage sein. Das Schallwandlerelement kann beispielsweise ein Piezoelement sein. Das Schallwandlerelement kann innerhalb des Gehäuses auf die Ultraschallemembran geklebt, mit dieser verschweißt oder auf andere Weise mit der Ultraschallmembran verbunden sein. Das Schallwandlerelement kann über einen losen Entkopplungsdraht mit einem nach außen geführten elektrischen Kontakt des Ultraschallsensors verbunden sein.

Der Blendenabschnitt kann ein Abschnitt eines größeren Formteils des Kraftfahrzeugs sein, das lediglich in einem Bereich, der vor der Ultraschallmembran des Ultraschallsensors angeordnet ist, den Blendenabschnitt ausbildet. Der Blendenabschnitt kann aber auch einen im wesentlichen gesamten Bereich einer eigenständigen Blende oder dergleichen umfassen, die zweckspezifisch zum Verdecken der Ultraschallmembran vor dieser bereitgestellt ist.

Unter einem akustischen Metamaterial ist insbesondere ein Material zu verstehen, dem durch strukturierende Bearbeitung vorteilhafte akustische Eigenschaften verliehen sind, die das unbearbeitete bzw. unstrukturierte Material nicht aufweist.

Das akustische Metamaterial kann insbesondere ein Metamaterial sein, das gemäß den in der eingangs zitierten Veröffentlichung von D'Aquanno et al. beschriebenen Grundsätzen ausgestaltet ist, auf die ausdrücklich verwiesen wird.

Gemäß einer Ausführungsform ist das akustische Metamaterial ein breitbandiges akustisches Metamaterial, das von Ultraschallwellen mindestens in einem Einfallswinkelbereich nichtresonant durchtunnelbar ist.

Unter "breitbandig" ist insbesondere zu verstehen, dass das akustische Metamaterial nicht nur für Ultraschallwellen mit einer bestimmten Resonanzfrequenz, sondern für Ultraschallwellen in einem breiten Frequenzband von beispielsweise 40 bis 60 kHz, vorzugsweise von 16 bis 100 kHz, gleichmäßig gut durchlässig ist.

Unter "nichtresonant durchtunnelbar" ist insbesondere zu verstehen, dass eine auf das akustische Metamaterial eintreffende Ultraschallwelle in dem Medium, wie etwa Luft, aus dem sie eintrifft, und in dem akustischen Metamaterial eine gleiche akustische Impedanz "fühlt", so dass unabhängig von der Frequenz der Ultraschallwelle und unabhängig von der Dicke des akustischen Metamaterials sowohl an der Eintrittsfläche als auch an der Austrittsfläche im Wesentlichen keine Reflexionen auftreten.

Unter "nichtresonant" ist insbesondere zu verstehen, dass sich beim Durchtunneln des akustischen Metamaterials keine resonanten Druckbäuche innerhalb des Metamaterials ausbilden. Eine derartige nichtresonante Durchtunnelbarkeit korrespondiert mit der Breitbandigkeit des akustischen Metamaterials.

Die nichtresonante Durchtunnelbarkeit ist vorzugsweise wenigstens in einem Ultraschallwellen-Einfallswinkelbereich gegeben, der eine im Wesentlichen senkrechte Einfallsrichtung auf eine Oberfläche des Blendenabschnitts aus dem akustischen Metamaterial umfasst. Praktisch sind Winkelbereiche zwischen 0° und 30° bis 85° gegen die Flächennormale erzielbar.

Anders ausgedrückt kann eine akustische Impedanz auf einer Seite des Blendenabschnitts aus dem akustischen Metamaterial an eine akustische Impedanz der Luft in dem zu messenden Raumbereich angeglichen sein, und eine akustische Impedanz auf einer anderen Seite des Blendenabschnitts kann ebenfalls an die akustische Impedanz von Luft oder auch an die akustische Impedanz der auf der anderen Seite angeordneten Ultraschallmembran des Ultraschallsensors angeglichen sein.

Erfindungsgemäß ist das akustische Metamaterial aus einem schallharten Grundmaterial ausgebildet, in dem ein Gitter aus mehreren Durchgangsöffnungen ausgebildet ist.

Unter "schallhart" ist insbesondere ein Grundmaterial zu verstehen, das in unbearbeitetem Zustand einen hohen Schallwiderstand aufweist und bei dem es in unbearbeitetem Zustand zu Reflexionen kommt, wenn Schallwellen auf es auftreffen. Beispiele für ein schallhartes Grundmaterial sind etwa ein Metallblech, das Teil einer Außenhülle eines Fahrzeugs sein kann, eine Kunststoffplatte, die Teil einer Innenraumverkleidung eines Fahrzeugs sein kann, und dergleichen.

Bei den mehreren Durchgangsöffnungen kann es sich insbesondere um Öffnungen mit rundem Querschnitt handeln, die von einer Seite des Blendenabschnitts zu der gegenüberliegenden Seite des Blendenabschnitts reichen.

Gegenüber anderen möglichen Ausgestaltungen eines akustischen Metamaterials zeichnet sich eine Ausgestaltung mit einem Gitter aus mehreren runden Durchgangsöffnungen vorteilhaft durch besonders günstige Transmissionseigenschaften aus.

Gemäß einer weiteren Ausführungsform ist ein Durchmesser einer jeweiligen Durchgangsöffnung kleiner als eine Wellenlänge der von der Ultraschallmembran auszusendenden und zu empfangenden Ultraschallwellen.

Die Frequenz der auszusendenden und zu empfangenden Ultraschallwellen, d. h. die Eigenfrequenz der Ultraschallmembran, liegt beispielsweise zwischen 16 und 100 kHz, vorzugsweise zwischen 40 und 60 kHz und besonders bevorzugt bei 50 kHz. Demgemäß ergibt sich bei einer Temperatur von 20 °C eine Wellenlänge der von der Ultraschallmembran auszusendenden und zu empfangen Ultraschallwellen zwischen 21 und 3 mm, vorzugsweise zwischen 9 und 6 und besonders bevorzugt von 7 mm. Bei anderen Temperaturen ergeben sich andere Wellenlängen. Der Durchmesser der jeweiligen Öffnungen wird ganz besonders bevorzugt zu einem Wert gewählt, der um einen, vorzugsweise ganzzahligen, Faktor von 2 oder mehr kleiner ist als die entsprechende bei 20 °C zu erwartende Wellenlänge, beispielsweise zu 1 mm.

Gemäß einer weiteren Ausführungsform ist ein Abstand zwischen zwei benachbarten Öffnungen des Gitters größer als der Durchmesser der Öffnungen und kleiner als die Wellenlänge der von der Ultraschallmembran auszusendenden und zu empfangenden Ultraschallwellen.

Beispielsweise kann der Lochabstand zwischen 2 und 4 mm und besonders bevorzugt zu 2.5 mm gewählt werden.

Die Erfinder waren in der Lage, mit einem dergestalt ausgebildeten akustischen Metamaterial, das einen plattenförmigen Blendenabschnitt aus Stahl, Aluminium oder Kunststoff mit einem Lochgitter mit einem Lochabstand von 2.5 mm und einem Lochdurchmesser von 1 mm umfasste, eine Steigerung der Empfangssignalamplitude, und eine entsprechende Verbesserung des Signal-Rausch-Abstands - je nach Abstand zwischen Ultraschallmembran und Blendenabschnitt - um einen Faktor von 1,5 bis 10 gegenüber einer nicht verdeckten Anordnung des Ultraschallsensors zu erzielen.

Eine vorteilhafte Variante sieht vor, dass die Durchgangsöffnungen mit einem Füllmaterial gefüllt sind, das sich von dem Grundmaterial unterscheidet. Vorzugsweise ist das Füllmaterial ein Schallweiches Material, wie beispielsweise Silikon. Dadurch kann eine geschlossene Oberfläche am erzielt werden.

Gemäß einer weiteren Ausführungsform umfasst die vorgeschlagene Ultraschallsensoranordnung ferner ein Formteil, an dem der Ultraschallsensor derart angebracht ist, dass die Ultraschallmembran dem Formteil zugewandt ist, und das Formteil umfasst in einem Abschnitt vor der Ultraschallmembran den Blendenabschnitt aus dem akustischen Metamaterial.

Das Formteil kann insbesondere aus dem Grundmaterial ausgebildet sein, aus dem auch das akustische Metamaterial ausgebildet ist, beispielsweise aus Metallblech oder Kunststoff. Insbesondere kann das Formteil einstückig mit dem Blendenabschnitt ausgebildet sein. Der Blendenabschnitt kann beispielsweise durch Perforieren des Formteils nachträglich in dem Formteil ausgebildet sein.

Das Formteil kann ein Formteil sein, dem im Kraftfahrzeug eine vorgegebene Funktion zukommt, an dem vorschlagsgemäß zusätzlich der Ultraschallsensor angebracht ist, und an dem in einem Bereich vor der Ultraschallmembran des Ultraschallsensors durch Strukturierung ein Blendenabschnitt aus einem akustischen Metamaterial ausgebildet ist. Auf diese Weise kann der Sensor hinter dem Formteil verdeckt sein und dennoch den Raumbereich auf der anderen Seite des Formteils mit hoher Echosignalamplitude messen.

Alternativ dazu kann das Formteil zweckspezifisch zur Anbringung des Ultraschallsensors daran und zur Ausbildung des Blendenabschnitts vorgesehen sein. Beispielsweise ist angedacht, einen Ultraschallsensor, der grundsätzlich unverdeckt im bzw. am Fahrzeug angebracht werden könnte, mit einer Blende zu versehen, die nur unwesentlich größer als der Ultraschallsensor zu sein braucht und dazu vorgesehen ist, die Vorteile des Blendenabschnitts aus dem akustischen Metamaterial für die Ultraschallsensoranordnung nutzbar zu machen.

Gemäß einer Ausführungsform ist der Ultraschallsensor dadurch an dem Formteil angebracht, dass eine Außenwand des Gehäuses des Ultraschallsensors mit einer Halterung verbunden ist und die Halterung in einem Bereich außerhalb des Blendenabschnitts an dem Formteil befestigt ist, wobei die Oberfläche der Ultraschallmembran parallel zu dem Formteil hinter dem Blendenabschnitt des Formteils angeordnet ist.

Auf diese Weise kann vorteilhafterweise das Gehäuse stabil an dem Formteil angebracht sein, wohingegen die von dem Gehäuse mechanisch entkoppelte Sensormembran nicht an dem Formteil angebracht bzw. von dem Formteil mechanisch entkoppelt ist.

Gemäß einer weiteren Ausführungsform ist das Formteil ein Karosserieformteil.

Das Karosserieformteil kann insbesondere einen Abschnitt der Außenhaut des Fahrzeugs ausbilden. Demgemäß kann die Ultraschallsensoranordnung verdeckt hinter der Außenhaut des Fahrzeugs angeordnet sein, so dass die Vorteile einer verdeckten Anordnung - Schutz vor mechanischen Einwirkungen von außen, Aerodynamik sowie Designvorgaben - mit den Vorteilen des akustischen Metamaterials - deutlich höhere Signalamplitude des Echosignals - kombiniert werden können. Das akustische Metamaterial kann durch strukturierendes Bearbeiten der Außenhaut des Fahrzeugs - Ausbilden eines von außen kaum sichtbaren Gitters aus Durchgangsöffnungen mit geeignetem Lochabstand und Öffnungsdurchmesser in der Außenhaut des Fahrzeugs wie vorstehend beschrieben - ausgebildet werden.

Gemäß einer weiteren Ausführungsform ist das Formteil ein Karosserieblech, ein Stoßfänger, eine Unterschale eines Fahrzeugseitenspiegels, eine Sichtschutzblende oder eine Fahrzeuginnenverkleidung.

Eine Ultraschallsensoranordnung mit hinter einem Karosserieblech oder hinter bzw. innerhalb eines Stoßfängers angebrachtem Ultraschallsensor kann zur Überwachung des Fahrzeugumfelds verwendet werden. Eine Ultraschallsensoranordnung mit hinter einer Fahrzeuginnenverkleidung angebrachtem Ultraschallsensor kann zur Überwachung des Fahrzeuginnenraums verwendet werden. Eine Ultraschallsensoranordnung mit hinter bzw. oberhalb einer Unterschale eines Fahrzeugseitenspiegels vorgesehenem Ultraschallsensor kann zur Überwachung einer Tiefe von Pfützen und dergleichen im Boden verwendet werden.

Gemäß einer weiteren Ausführungsform liegt die Ultraschallmembran an dem Blendenabschnitt an.

Insbesondere kann die Ultraschallmembran ohne Anpressdruck und/oder ohne an dem Blendenabschnitt fixiert zu sein an dem Blendenabschnitt anliegen.

Insbesondere kann hierbei die akustische Impedanz der der Ultraschallmembran zugewandten Seite des akustischen Metamaterials an die akustische Impedanz der Ultraschallmembran angeglichen sein.

Bei der vorliegenden Ausführungsform kann der festgestellte Effekt einer drastischen Erhöhung der Echosignalamplitude vorteilhaft erzielt werden.

Zusätzlich können außerhalb des Blendenabschnitts Dämpfungselemente, wie Bohrungen oder Dämpfungsmaterial, an dem Formteil vorgesehen sein. Auf diese Weise kann dem Entstehen von Körperschall im Formteil zusätzlich entgegengewirkt werden.

Gemäß einer weiteren Ausführungsform sind die Ultraschallmembran und der Blendenabschnitt mechanisch entkoppelt.

Gemäß einer weiteren Ausführungsform ist zwischen der Ultraschallmembran und dem Blendenabschnitt ein Luftspalt ausgebildet.

Der Luftspalt ist ein mögliches Mittel zum mechanischen Entkoppeln der Ultraschallmembran von dem Blendenabschnitt bzw. dem Formteil. Da die Ultraschallmembran auch von dem Gehäuse des Ultraschallsensors mechanisch entkoppelt ist, ist mithin keine mechanische bzw. akustische Kopplung zwischen der Ultraschallmembran und dem Formteil vorgesehen, an dem das Gehäuse des Ultraschallsensors angebracht ist. Demgemäß wird das Formteil kaum zu Strukturschwingungen angeregt. Demgemäß sind Dämpfungselemente an dem Formteil, wie angebrachtes Dämpfungsmaterial, zur Dämpfung vorgesehene Bohrungen und dergleichen vorteilhafterweise entbehrlich.

Aufgrund der guten Transmissionseigenschaften des vorgeschlagenen akustischen Metamaterials ist es nicht erforderlich, die Ultraschallmembran mit dem Blendenabschnitt mechanisch zu koppeln. Der Luftspalt kann vorzugsweise dünn, besonders bevorzugt dünner als 1 mm, und besonders bevorzugt 0,1 mm dünn oder noch dünner ausgestaltet werden. In diesem Fall kann der vorteilhafte Effekt einer Verstärkung der Echosignalamplitude durch das akustische Metamaterial besonders gut erzielt werden.

Gemäß einem zweiten Aspekt wird ein Kraftfahrzeug mit mindestens einer Ultraschallsensoranordnung wie vorstehend beschrieben vorgeschlagen.

Die für die Ultraschallsensoranordnung des ersten Aspekts beschriebenen Merkmale, Vorteile und Ausführungsformen gelten entsprechend auch für das Kraftfahrzeug des zweiten Aspekts.

Das Kraftfahrzeug kann insbesondere ein Personenkraftfahrzeug oder ein Lastkraftfahrzeug sein. Das Kraftfahrzeug kann über ein Assistenzsystem, wie beispielsweise ein Fahrassistenzsystem oder ein Parkassistenzsystem, verfügen, das insbesondere zum teilautonomen oder vollautonomen Fahren des Fahrzeugs eingerichtet sein kann. Unter teilautonomem Fahren wird beispielsweise verstanden, dass das Assistenzsystem eine Lenkvorrichtung und/oder eine Fahrstufenautomatik steuert. Unter vollautonomem Fahren wird beispielsweise verstanden, dass das Assistenzsystem zusätzlich auch eine Antriebseinrichtung und eine Bremseinrichtung steuert. Das Assistenzsystem kann hardwaretechnisch und/oder softwaretechnisch implementiert sein. Bei einer hardwaretechnischen Implementierung kann das Assistenzsystem zum Beispiel als Computer oder als Mikroprozessor ausgebildet sein. Bei einer softwaretechnischen Implementierung kann das Assistenzsystem als Computerprogrammprodukt, als eine Funktion, als eine Routine, als Teil eines Programmcodes oder als ausführbares Objekt ausgebildet sein. Insbesondere kann das Assistenzsystem als Teil eines übergeordneten Steuerungssystems des Fahrzeugs, wie beispielsweise eine ECU (Electronic Control Unit), ausgebildet sein.

Das Assistenzsystem kann die vorgeschlagene Ultraschallsensoranordnung zum Überwachen bzw. Vermessen eines Umfelds des Kraftfahrzeugs und/oder eines Innenraums des Kraftfahrzeugs mittels Ultraschallmessungen nach dem Puls-Echo-Verfahren verwenden.

Gemäß einer Ausführungsform bildet das Formteil einen Abschnitt einer Außenhaut des Kraftfahrzeugs, und der Ultraschallsensor ist dergestalt auf einer einem Fahrzeuginneren zugewandten Seite des Formteils an dem Formteil angebracht, dass die von dem Blendenabschnitt des Formteils verdeckte Ultraschallmembran in Bezug auf das Kraftfahrzeug nach außen weist.

Die Ultraschallsensoranordnung kann somit hinter der Außenhaut des Kraftfahrzeugs verdeckt sein. Das akustische Metamaterial kann durch eine strukturierende Bearbeitung, beispielsweise durch Perforieren, der Außenhaut im Bereich der Ultraschallmembran des Ultraschallsensors ausgebildet sein. Durchgeführte Ultraschallmessungen profitieren dabei von der erhöhten Echosignalamplitude. Bei Ausführungsformen, bei denen die Ultraschallmembran nicht mit der Außenhaut des Kraftfahrzeugs gekoppelt ist, profitieren die durchgeführten Ultraschallmessungen außerdem davon, dass in der Außenhaut kein Körperschall angeregt wird.

Da die Öffnungen sehr klein sind - vorzugsweise kleiner als eine Wellenlänge der Ultraschallwellen - wird das Design der Außenhülle kaum beeinträchtigt.

Denkbar ist ferner, eine Reinigungsvorrichtung vorzusehen, die die Öffnungen in dem akustischen Mikromaterial bei Bedarf oder in regelmäßigen Abständen durch Wischen, Ausspülen oder Durchblasen reinigt und von Schmutz und Regenwasser freihält. Die Reinigungsvorrichtung kann analog zu einer vergleichbaren Reinigungsvorrichtung aus dem Gebiet der Scheibenwischertechnik ausgebildet sein.

Gemäß einer weiteren Ausführungsform ist das Formteil ein im Fahrzeuginneren bereitgestelltes Formteil, und der Ultraschallsensor ist dergestalt auf einer in Bezug auf das Kraftfahrzeug nach außen weisenden Seite des Formteils an dem Formteil angebracht, dass die von dem Blendenabschnitt des Formteils verdeckte Ultraschallmembran ins Fahrzeuginnere weist.

Bei der Überwachung des Fahrzeuginnenraums besteht vorteilhafterweise keine Problematik des Eindringens von Schmutz und Regenwasser, so dass sich die vorgeschlagene Lösung hier besonders gut eignet.

Denkbar ist auch, dass das Formteil einen Abschnitt eines Seitenspiegels des Kraftfahrzeugs bildet und der Ultraschallsensor dergestalt auf einer innenliegenden Seite des Formteils an dem Formteil angebracht ist, dass die von dem Blendenabschnitt des Formteils verdeckte Ultraschallmembran in Bezug auf das Kraftfahrzeug nach unten weist.

Somit kann beispielsweise ein Untergrund des Fahrzeugs, wie etwa die Tiefe einer Pfütze, vermessen werden. Zusätzlich besteht dadurch, dass die Messrichtung nach unten weist und somit auch die Öffnungen in dem akustischen Metamaterial nach unten weisen, ein vermindertes Risiko des Eintretens von Schmutz und Regenwasser in die Öffnungen des akustischen Metamaterials.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsbeispielen unter Bezugnahme auf die beigefügten Figuren näher erläutert.
- Fig. 1: zeigt eine schematische Schnittansicht einer Ultraschallsensoranordnung gemäß einem ersten Ausführungsbeispiel;
- Fig. 2: zeigt eine schematische Schnittansicht einer Ultraschallsensoranordnung gemäß einem zweiten Ausführungsbeispiel;
- Fig. 3: zeigt eine schematische Draufsicht auf ein Kraftfahrzeug gemäß einem dritten Ausführungsbeispiel;
- Fig. 4: zeigt eine schematische Draufsicht auf ein Formteil mit einem Blendenabschnitt aus einem akustischen Metamaterial gemäß Ausführungsbeispielen;
- Fig. 5: zeigt eine Auftragung eines gemessenen Echosignals mit einem unverdeckten Ultraschallsensor;
- Fig. 6: zeigt eine Auftragung eines gemessenen Echosignals mit dem Ultraschallsensor aus Fig. 5 bei Verdeckung durch den Blendenabschnitt des Formteils aus Fig. 4; und
- Fig. 7: zeigt eine Auftragung einer winkelabhängigen Senderichtcharakteristik eines mit einem Metamaterial verdeckten und eines unverdeckten Ultraschallsensors.

In den Figuren sind gleiche oder funktionsgleiche Elemente mit denselben Bezugszeichen versehen worden, sofern nichts anderes angegeben ist.

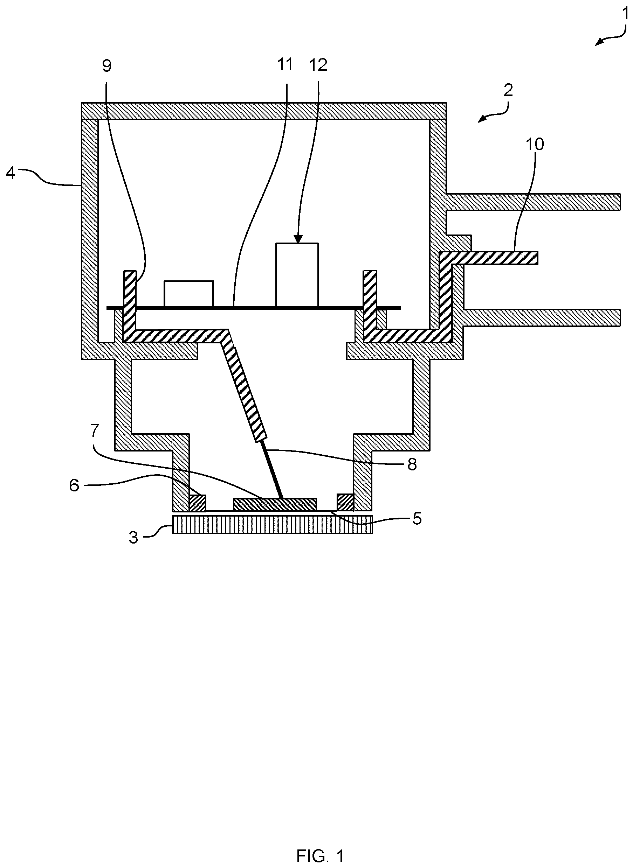

Fig. 1 zeigt eine schematische Schnittansicht einer Ultraschallsensoranordnung 1 gemäß einem ersten Ausführungsbeispiel. Die Ultraschallsensoranordnung 1 umfasst einen Ultraschallsensor 2 und einen Blendenabschnitt 3.

Der Ultraschallsensor 1 weist ein Gehäuse 4 auf, das aus einem schallharten Kunststoff ausgebildet ist. Eine Ultraschallmembran 5 ist in einen Entkopplungsring 6 aus einem schallweichen Material, wie Silikon, eingepasst. Auf eine Innenfläche der Ultraschallmembran 5 ist ein Schallwandlerelement 7, wie beispielsweise ein Piezoelement, geklebt. Die Baugruppe aus Piezoelement 7, Ultraschallmembran 5 und Entkopplungsring 6 ist in eine Öffnung des Gehäuses 4 eingepasst.

Das Piezoelement 7 ist über einen Entkopplungsdraht 8 mit einem ersten metallischen Kontaktstift 9 verbunden. Der Entkopplungsdraht 8 kann eine überschüssige Länge aufweisen und demgemäß nicht unter Spannung stehen. Ein zweiter metallischer Kontaktstift 10 ist aus dem Gehäuse 4 heraus nach außen geführt. Eine Leiterplatte 11 ist auf die metallischen Kontaktstifte 9, 10 aufgesetzt. Auf der Leiterplatte 11 sind elektronische Bauelemente 12 zur elektrischen Ansteuerung des Piezoelements 7 montiert.

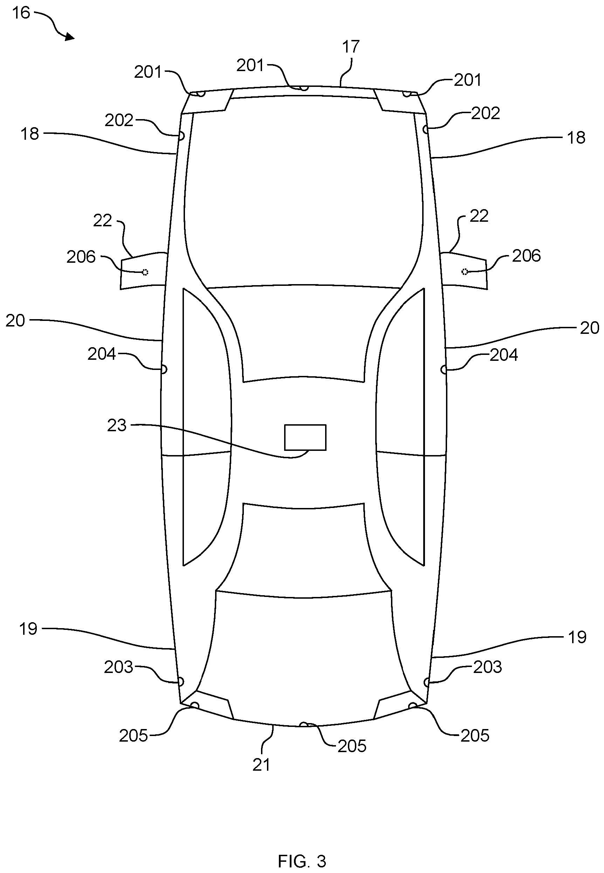

Eine Steuereinheit (23 in Fig. 3) des Kraftfahrzeugs (16 in Fig. 3) kann somit über eine nicht gezeigte Leitung und den Kontaktstift 10 mit den elektronischen Bauelementen 12 des Ultraschallsensors 2 verbunden sein und durch Übertragen elektrischer Signale an den Ultraschallsensor 2 die Bauelemente 12 dazu veranlassen, das Piezoelement 7 anzusteuern und die Ultraschallmembran 5 zu Schwingungen anzuregen und demgemäß ein Ultraschallsignal auszusenden. Desgleichen kann die Steuereinheit des Kraftfahrzeugs elektrische Signale von dem Ultraschallsensor 2 empfangen, die indikativ für eine von dem Piezoelement 7 erfasste Schwingung der Ultraschallmembran 5 sind, und auf diese Weise ein empfangenes bzw. reflektiertes Ultraschallsignal messen.

Es sei darauf hingewiesen, dass die Baugruppe aus Ultraschallmembran 5 und Piezoelement 7 mittels des Entkopplungsrings 6 in die Öffnung des Gehäuses 4 eingepasst ist und mittels des Entkopplungsdrahts 8 elektrisch kontaktiert ist. Auf diese Weise ist die Ultraschallmembran 5 vollständig mechanisch von dem Gehäuse 4 entkoppelt.

Der Blendenabschnitt 3 ist vor der Ultraschallmembran 5 des Ultraschallsensors 2 angeordnet und ist aus einem, insbesondere breitbandigen, akustischen Metamaterial ausgebildet, das später eingehend beschrieben wird.

Der Blendenabschnitt 3 ist insbesondere separat von dem Ultraschallsensor 2 bereitgestellt. Der Blendenabschnitt 3 ist insbesondere ohne ein Kopplungselement zum Koppeln des Ultraschallsensors 2 mit dem Blendenabschnitt 3 bereitgestellt. Zwischen der Ultraschallmembran 5 und dem Blendenabschnitt 3 kann ein dünner Luftspalt ausgebildet sein, um eine mechanische Entkopplung der Ultraschallmembran 5 von dem Blendenabschnitt 3 und weiteren, nicht gezeigten, mit dem Blendenabschnitt 3 verbundenen Teilen (Formteile, Halterungen und dergleichen) zu bewirken. Es ist jedoch auch denkbar, dass die Ultraschallmembran 5 ohne Anpressdruck an dem Blendenabschnitt 3 anliegt.

Das solchermaßen angeordnete akustische Metamaterial des Blendenabschnitts 3 kann vorteilhafterweise den Signal-Rausch-Abstand des von dem Ultraschallsensor 2 gelieferten Messsignals signifikant verbessern.

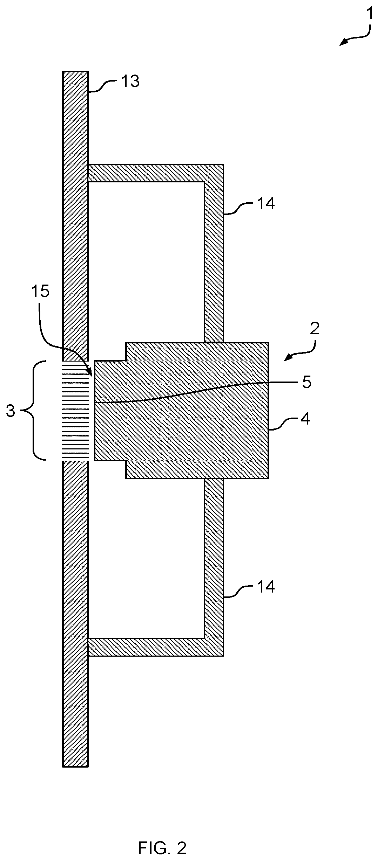

Fig. 2 zeigt eine schematische Schnittansicht einer Ultraschallsensoranordnung 1 gemäß einem zweiten Ausführungsbeispiel.

Der Ultraschallsensor 2 und der Blendenabschnitt 3 der Ultraschallsensoranordnung 1 des zweiten Ausführungsbeispiels können beispielsweise der Ultraschallsensor 2 und der Blendenabschnitt 3 des ersten Ausführungsbeispiels sein und werden nicht erneut beschrieben. Im zweiten Ausführungsbeispiel ist der Blendenabschnitt 3 ein Abschnitt, der einstückig mit einem Formteil 13 und aus demselben schallharten Grundmaterial wie das Formteil 13 ausgebildet ist. Das heißt, der Blendenabschnitt 3 des zweiten Ausführungsbeispiels ist ein Abschnitt des Formteils 13.

Das Formteil 13 kann beispielsweise ein Abschnitt einer Außenhaut eines Kraftfahrzeugs sein, wie beispielsweise ein Türaußenblech, ein Stoßfänger, ein Kotflügelblech oder dergleichen. Das Formteil 13 kann jedoch auch aus Kunststoff ausgebildet sein und beispielsweise ein Stoßfänger, eine Sichtblende, eine Fahrzeuginnenverkleidung oder dergleichen sein. Da das Formteil 13 aus einem schallharten Grundmaterial ausgebildet ist, kann Körperschall bzw. können Körperschwingungen in dem Formteil 13 auftreten.

Im Blendenabschnitt 3 des Formteils 13 ist das Grundmaterial des Formteils 13 durch eine strukturierende Bearbeitung zu einem akustischen Metamaterial ausgebildet.

An einer Außenseite des Gehäuses 4 sind Halterungen 14 angebracht. Die Halterungen 14 sind ihrerseits an dem Formteil 13 befestigt. Im Speziellen sind die Halterungen 14 in einem Bereich außerhalb des Blendenabschnitts 3 an dem Formteil 13 befestigt. Der Ultraschallsensor 2 wird von den Halterungen 14 dergestalt gehalten, dass die Ultraschallmembran 5 des Ultraschallsensors 2 parallel zu dem Formteil 13 hinter dem Blendenabschnitt 3 des Formteils 13 angeordnet ist. Hierbei ist vorzugsweise ein beispielsweise ca. 0,1 mm dünner Luftspalt 15 zwischen dem akustischen Metamaterial des Blendenabschnitts 3 und der Ultraschallmembran 5 des Ultraschallsensors 2 ausgebildet.

Zwar sind somit das Formteil 13 die Halterungen 14 und das Gehäuse 4 des Ultraschallsensors 2, die jeweils aus schallharten Materialien ausgebildet sind, mechanisch miteinander gekoppelt. Jedoch ist die Ultraschallmembran 5, wie anhand des ersten Ausführungsbeispiels erläutert wurde, mechanisch von dem Gehäuse 4 des Ultraschallsensors 2 entkoppelt. Ferner ist die Ultraschallmembran 2 durch den Luftspalt 15 auch mechanisch von dem Formteil 13 entkoppelt. Da der Blendenabschnitt 3 aus dem akustischen Metamaterial für Ultraschallwellen zudem nichtresonant durchtunnelbar ist, ist ein Einfluss von Strukturschwingungen der Struktur aus Formteil 13, Halterungen 14 und Gehäuse 4 auf die Qualität des von der Ultraschallsensoranordnung 1 gelieferten Messsignals stark reduziert.

Gemäß einer Abwandlung des zweiten Ausführungsbeispiels liegt die Ultraschallmembran 5 an dem Blendenabschnitt 3 bzw. an dem akustischen Metamaterial 3 an. Das heißt, gemäß der Abwandlung ist kein Luftspalt 15 vorgesehen. Die akustische Impedanz des akustischen Metamaterials des Blendenabschnitts 3 kann auf der dem Ultraschallsensor 2 zugewandten Seite an die akustische Impedanz der Ultraschallmembran 5 angeglichen sein.

Zwar wird gemäß dieser Abwandlung ggf. keine oder eine wenig gute akustische Entkopplung zwischen Ultraschallmembran 5 und Formteil 13 erzielt. Jedoch kann der durch das akustische Metamaterial 3 bewirkte Effekt einer Verstärkung der Amplituden der gemessenen Echosignale aufgrund eines besseren Impedanzabgleichs ohne den Luftspalt 15 noch stärker ausfallen. Dadurch kann der Signal-Rausch-Abstand noch mehr verbessert werden.

Für eine bessere akustische Entkopplung des Formteils 13 können gemäß der Abwandlung in einem Bereich außerhalb des Blendenabschnitts 3 an dem Formteil 13 Dämpfungselemente, wie Dämpfungsmaterialien, Dämpfungsbohrungen oder dergleichen vorgesehen sein. Alternativ ist auch denkbar, eingekoppelte Strukturschwingungen rechnerisch aus dem Messsignal des Ultraschallsensors 2 zu entfernen.

Fig. 3 zeigt eine schematische Draufsicht auf ein Kraftfahrzeug 16 gemäß einem dritten Ausführungsbeispiel.

Das Kraftfahrzeug 16 weist mehrere Ultraschallsensoren 201-206 auf. Drei erste Ultraschallsensoren 201 sind verdeckt auf einer dem Fahrzeuginneren zugewandten Seite eines Frontstoßfängers 17 (Beispiel für ein Formteil 13, Fig. 2) angeordnet. Zwei zweite Ultraschallsensoren 202 sind verdeckt auf einer dem Fahrzeuginneren zugewandten Seite eines jeweiligen Frontkotflügels 18 (Beispiel für ein Karosserieformteil 13, Fig. 2, das einen Abschnitt einer Außenhaut des Fahrzeugs 16 ausbildet) angeordnet. Zwei dritte Ultraschallsensoren 203 sind verdeckt auf einer dem Fahrzeuginneren zugewandten Seite eines jeweiligen Heckkotflügels 19 (Beispiel für ein Karosserieformteil 13, Fig. 2, das einen Abschnitt einer Außenhaut des Fahrzeugs 16 ausbildet) angeordnet. Zwei vierte Ultraschallsensoren 204 sind verdeckt auf einer dem Fahrzeuginneren zugewandten Seite eines jeweiligen Türaußenblechs 20 (Beispiel für ein Karosserieformteil 13, Fig. 2, das einen Abschnitt einer Außenhaut des Fahrzeugs 16 ausbildet) angeordnet. Drei fünfte Ultraschallsensoren 205 sind verdeckt auf einer dem Fahrzeuginneren zugewandten Seite eines Heckstoßfängers 21 (Beispiel für ein Formteil 13, Fig. 2) angeordnet. Weiterhin sind zwei sechste Ultraschallsensoren 206 verdeckt auf einer innenliegenden Seite einer Unterschale eines jeweiligen Fahrzeugseitenspiegels 22 (Beispiel für ein Formteil 13, Fig. 2) angeordnet.

Die Ultraschallmembranen (5 in Fig. 1, 2) der Ultraschallsensoren 201-206 werden dabei jeweils von einem Blendenabschnitt 3 (Fig. 1, 2) des jeweiligen Formteils 17-22, in welchem das Grundmaterial des jeweiligen Formteils 17-22 zu einem akustischen Metamaterial ausgebildet ist, verdeckt und weisen in Bezug auf das Kraftfahrzeug 16 nach außen (Ultraschallsensoren 201-205) bzw. unten (Ultraschallsensoren 206).

Demgemäß ist an den Installationsorten der Ultraschallsensoren 201 bis 206 am Kraftfahrzeug 16 des dritten Ausführungsbeispiels jeweils eine Ultraschallsensoranordnung (1 in Fig. 1, 2) gemäß dem ersten bzw. zweiten Ausführungsbeispiel ausgebildet.

Das Kraftfahrzeug 16 umfasst eine zentrale Steuereinheit (schematisch als 23 gezeigt), die ein Parkassistenzsystem ausbildet, welches die von den Ultraschallsensoren 201 bis 206 gebildeten Ultraschallsensoranordnungen zur Vermessung eines Umfelds des Kraftfahrzeugs 16 nach dem Puls-Echo-Verfahren benutzt.

Weiterhin können in dem Kraftfahrzeug 16 auch (nicht gezeigte) Ultraschallsensoren vorgesehen sein, deren Ultraschallmembrane (5 in Fig. 1, 2) ins Fahrzeuginnere weisen. Derartige Ultraschallsensoren können beispielsweise auf einer in Bezug auf das Kraftfahrzeug nach außen weisenden Seite einer Fahrzeuginnenraumverkleidung (Beispiel für ein Formteil 13, Fig. 2) angeordnet sein und von einem in der Fahrzeuginnenraumverkleidung ausgebildeten Blendenabschnitt (3, Fig. 1, 2) aus einem akustischen Metamaterial verdeckt werden. Die Steuereinheit 23 kann die nach innen weisenden Ultraschallsensoren zur Überwachung des Fahrzeuginnenraums nach dem Puls-Echo-Verfahren benutzen, beispielsweise zur Erfassung der Fahrgastanzahl, der Kofferraumbeladung, zur Überwachung des Gesundheitszustands bzw. der Fahreignung eines Fahrers des Kraftfahrzeugs 16 und dergleichen.

Vorteilhafterweise sind alle in dem Kraftfahrzeug 16 vorgesehen Ultraschallsensoren 201-206 durch einen jeweiligen Blendenabschnitt (3 in Fig. 1, 2) aus akustischem Metamaterial verdeckt, profitieren dadurch einerseits von Schutz vor mechanischen Beschädigungen und Blicken und andererseits von einer Verbesserung der Echosignalamplitude durch das akustische Metamaterial.

Im Weiteren werden anhand von mit Prototypen durchgeführten Messungen das akustische Metamaterial und seine Vorteile genauer erläutert.

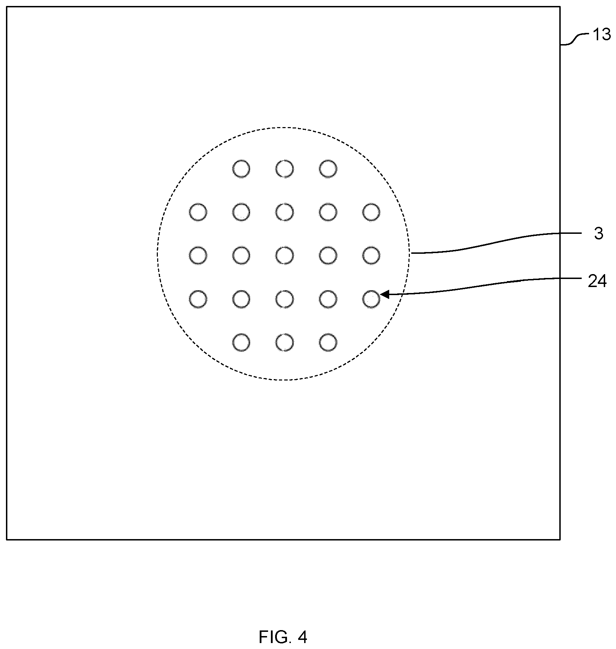

Fig. 4 zeigt eine schematische Draufsicht auf ein Formteil 13 mit einem Blendenabschnitt 3. Das Formteil 13 ist aus einem schallharten Grundmaterial ausgebildet. Es wurden verschiedene Prototypen für das Formteil 13 aus den Grundmaterialien Aluminium mit 1 mm dicke, Kunststoff mit 3 mm Dicke und Stahl mit 0,9 mm Dicke hergestellt. Die Prototypen wiesen jeweils eine Fläche von 10 x 10 cm² auf.

Im Blendenabschnitt 3 des Formteils 13 wurde ein akustisches Metamaterial dadurch ausgebildet, dass das Grundmaterial des Formteils 13 in dem Blendenabschnitt 3 auf spezielle Weise perforiert wurde. Im Speziellen wurde ein regelmäßiges Gitter aus einundzwanzig runden Durchgangsöffnungen 24 gebildet. Die runden Durchgangsöffnungen 24 wiesen jeweils einen Durchmesser von 1 mm auf. Das Gitter wies einen Lochabstand (Abstand zwischen je zwei benachbarten Öffnungen 24) von 2,5 mm auf. Damit waren der Durchmesser der Durchgangsöffnungen 24 und der Lochabstand jeweils deutlich kleiner als die Wellenlänge der von einem Ultraschallsensor 2 (Fig. 1, 2) ausgesendeten Ultraschallwellen, die bei Raumtemperatur typischerweise ungefähr 7 mm beträgt. Jedoch war der Lochabstand größer als der Öffnungsdurchmesser.

Der perforierte Blendenabschnitt 3 der Prototypen 13 wurde vor einer Ultraschallmembran (5 in Fig. 1) eines Ultraschallsensors (2 in Fig. 1) angeordnet und damit jeweils eine Ultraschallsensoranordnung (1 in Fig. 1) mit verdecktem Ultraschallsensor (2 in Fig. 1) ausgebildet. Dabei wurde die Ultraschellmembran (5 in Fig. 1) parallel zu dem Blendenabschnitt 3 angeordnet, wobei zwischen Blendenabschnitt 3 und Ultraschallmembran (5 in Fig. 1) ein Luftspalt von 0,1 mm verblieb.

Alle genannten Prototypen des Formteils 13 zeigten die vorliegend beschriebenen vorteilhaften Effekte. Es besteht somit eine hohe Designfreiheit bezüglich Material und Dicke des Formteils 13, hinter dem der Ultraschallsensor (2 in Fig. 1) angeordnet werden kann.

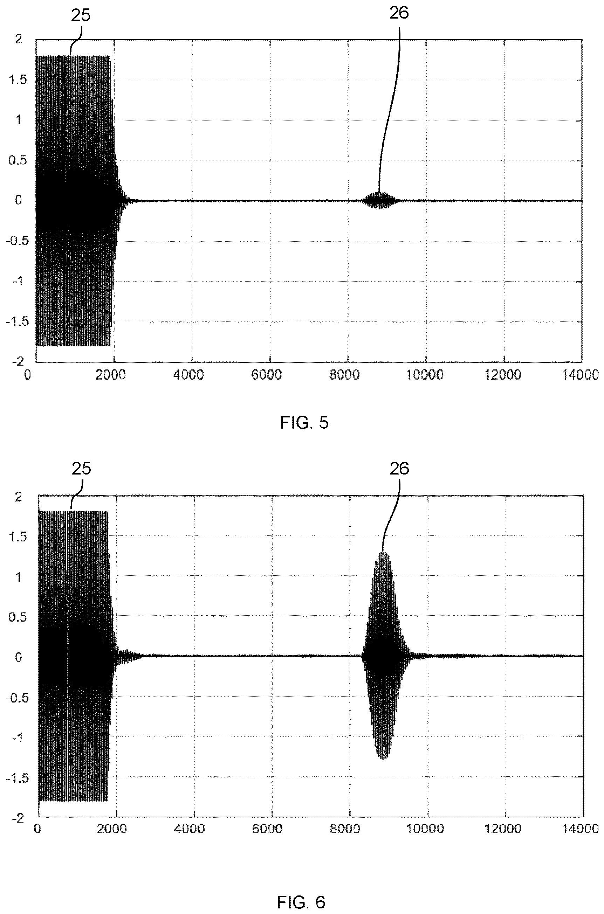

Nachstehend werden anhand von Fig. 5 bis 7, ggf. unter Rückbezug auf Fig. 1, 2 und 4, Messergebnisse für eine verdeckte Ultraschallsensoranordnung 1, die aus einem Ultraschallsensor 2 und dem Prototyp-Formteil 13 aus 0,9 mm dickem Stahl mit dem einundzwanzig Durchgangsöffnungen 24 umfassenden Lochgitter wie vorstehend beschrieben gebildet ist, mit Messergebnissen verglichen, die mit demselben unverdeckten Ultraschallsensor 2 unter gleichen Versuchsbedingungen erzielt wurden.

Fig. 5 zeigt eine Auftragung eines gemessenen Echosignals mit einem unverdeckten Ultraschallsensor, und Fig. 6 zeigt eine Auftragung eines gemessenen Echosignals mit der verdeckten Ultraschallsensoranordnung 1. Entlang der horizontalen Achse in Fig. 5 und 6 sind Abtastungen des von dem jeweiligen Ultraschallsensor 1 gelieferten Messsignals aufgetragen; die horizontale Achse in Fig. 5 und 6 kann auch als Zeitachse aufgefasst werden. Auf der vertikalen Achse in Fig. 5 und Fig. 6 ist die Spannungsamplitude des Messsignals in Volt aufgetragen.

In einem Zeitbereich von 0 bis 2000 werden Strukturschwingungen 25 des Ultraschallsensors 2 gemessen, die beim Aussenden eines Ultraschallsignals trotz der mechanischen Entkopplung der Ultraschallmembran 5 unweigerlich auftreten..

Nach einer Zeit von ca. 8700 Abtastungen wird ein Echosignal 26 beobachtet. In den Figuren ist deutlich zu erkennen, dass die Amplitude des Echosignals 26 in Fig. 6 der mit dem akustischen Metamaterial verdeckten Ultraschallsensoranordnung 1 gegenüber der Amplitude des Echosignals 26 in Fig. 5 des unverdeckten Ultraschallsensors 2 um einen Faktor von ca. 10 verstärkt ist, bei im Übrigen identischen Versuchsbedingungen. Demgemäß ist der Signal-Rausch-Abstand um einen Faktor von ca. 10 verbessert.

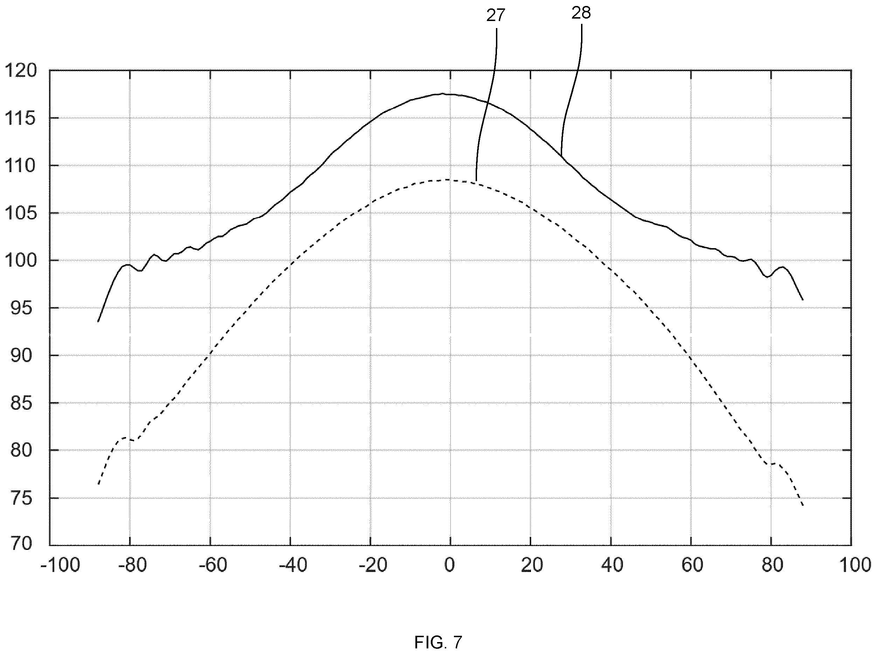

Fig. 7 zeigt eine Auftragung einer winkelabhängigen Senderichtcharakteristik eines unverdeckten Ultraschallsensors 2 und der verdeckten Ultraschallsensoranordnung 1 in der gleichen Messanordnung, die auch für die in Fig. 5 und Fig. 6 gezeigten Messungen verwendet wurde.

Entlang der horizontalen Achse in Fig. 7 ist ein Winkel relativ zur Flächennormalen des Formteils 13 in Grad aufgetragen, und entlang der vertikalen Achse in Fig. 7 ist ein Schalldruckpegel des Sendesignals in dB aufgetragen.

Die gestrichelte Kurve 27 zeigt die Sendecharakteristik des unverdeckten Ultraschallsensors 2, und die durchgezogene Kurve 28 zeigt die Sendecharakteristik der verdeckten Ultraschallsensoranordnung 1.

Wie in Fig. 7 zu sehen ist, erweist sich die verdeckte Ultraschallsensoranordnung 1 mit dem breitbandigen akustischen Metamaterial im gesamten relevanten Winkelbereich von etwa - 85° bis 85° als vorteilhaft. Der Schalldruckpegel liegt durchgängig signifikant höher als bei dem unverdeckten Ultraschallsensor 2.

Damit zeigt sich, dass der anhand von Fig. 4 beschriebene Aufbau eines Blendenabschnitts 3 zur Ausbildung eines akustischen Metamaterials sowohl von ausgehenden als auch von einfallenden Ultraschallwellen in einem weiten Winkelbereich nichtresonant durchtunnelbar ist.

Obwohl die vorliegende Erfindung anhand von Ausführungsbeispielen beschrieben wurde, ist sie vielfältig modifizierbar. Insbesondere sind die beschriebenen Anwendungsbeispiele im Kraftfahrzeug 16 rein beispielhaft zu verstehen. Die vorgeschlagene Ultrachallsensoranordnung hat darüber hinaus zahlreiche weitere Anwendungsfelder. Beispielsweise könnte auch ein in einer Fabrikanlage fahrender Roboter vorteilhaft sein Umfeld mit einer entsprechenden Ultraschallsensoranordnung vermessen.

### BEZUGSZEICHENLISTE

- 1: Ultraschallsensoranordnung
- 2: Ultraschallsensor
- 3: Blendenabschnitt
- 4: Gehäuse
- 5: Ultraschallmembran
- 6: Entkopplungsring
- 7: Schallwandlerelement, Piezoelement
- 8: Entkopplungsdraht
- 9: Kontaktstift
- 10: Kontaktstift
- 11: Leiterplatte
- 12: elektronische Bauelemente
- 13: Formteil
- 14: Halterungen
- 15: Luftspalt
- 16: Kraftfahrzeug
- 17: Frontstoßfänger
- 18: Frontkotflügel
- 19: Heckkotflügel
- 20: Türaußenblech
- 21: Heckstoßfänger
- 22: Seitenspiegel
- 23: Steuereinheit
- 24: Durchgangsöffnungen
- 25: Strukturschwingungen
- 26: Echosignal
- 27: Senderichtcharakteristik eines unverdeckten Ultraschallsensors
- 28: Senderichtcharakteristik der verdeckten Ultraschallsensoranordnung

## Patentansprüche

1. Ultraschallsensoranordnung (1) für ein Kraftfahrzeug (16), umfassend:
einen Ultraschallsensor (2) mit einem Gehäuse (4), einer von dem Gehäuse (4) mechanisch entkoppelten Ultraschallmembran (5) und einem Schallwandlerelement (7) zur Schwingungsanregung und Schwingungserfassung der Ultraschallmembran (5) und
einen vor der Ultraschallmembran (5) angeordneten Blendenabschnitt (3) aus einem akustischen Metamaterial,
**dadurch gekennzeichnet, dass**
das akustische Metamaterial aus einem schallharten Grundmaterial ausgebildet ist, in dem ein Gitter aus mehreren Durchgangsöffnungen (24) ausgebildet ist.

2. Ultraschallsensoranordnung nach Anspruch 1,
wobei das akustische Metamaterial ein breitbandiges akustisches Metamaterial ist, das von Ultraschallwellen mindestens in einem Einfallswinkelbereich nichtresonant durchtunnelbar ist.

3. Ultraschallsensoranordnung nach Anspruch 1 oder 2,
wobei ein Durchmesser einer jeweiligen Durchgangsöffnung (24) kleiner als eine Wellenlänge der von der Ultraschallmembran (5) auszusendenden und zu empfangenden Ultraschallwellen ist.

4. Ultraschallsensoranordnung nach Anspruch 3,
wobei ein Abstand zwischen zwei benachbarten Durchgangsöffnungen (24) des Gitters größer als der Durchmesser der Durchgangsöffnungen (24) und kleiner als die Wellenlänge der von der Ultraschallmembran (5) auszusendenden und zu empfangenden Ultraschallwellen ist.

5. Ultraschallsensoranordnung nach einem der Ansprüche 1 bis 4,
**dadurch gekennzeichnet, dass**
die Durchgangsöffnungen mit einem Füllmaterial gefüllt sind, das sich von dem Grundmaterial unterscheidet.

6. Ultraschallsensoranordnung nach einem der Ansprüche 1 bis 5, ferner umfassend:
ein Formteil (13), an dem der Ultraschallsensor (2) derart angebracht ist, dass die Ultraschallmembran (5) dem Formteil (13) zugewandt ist, und
das Formteil (13) in einem Abschnitt vor der Ultraschallmembran (5) den Blendenabschnitt (13) aus dem akustischen Metamaterial umfasst.

7. Ultraschallsensoranordnung nach Anspruch 6,
wobei der Ultraschallsensor (2) dadurch an dem Formteil (13) angebracht ist, dass eine Außenwand des Gehäuses (4) des Ultraschallsensors (2) mit einer Halterung (14) verbunden ist und die Halterung (14) in einem Bereich außerhalb des Blendenabschnitts (3) an dem Formteil (13) befestigt ist,
wobei eine Oberfläche der Ultraschallmembran (5) parallel zu dem Formteil (13) hinter dem Blendenabschnitt (3) des Formteils (13) angeordnet ist.

8. Ultraschallsensoranordnung nach Anspruch 6 oder 7,
wobei das Formteil (13) ein Karosserieformteil (18, 19, 20) ist.

9. Ultraschallsensoranordnung nach einem der Ansprüche 6 bis 8,
wobei das Formteil ein Karosserieblech (18, 19, 20), ein Stoßfänger (17, 21) , eine Unterschale eines Fahrzeugseitenspiegels (22), eine Sichtschutzblende oder eine Fahrzeuginnenverkleidung ist.

10. Ultraschallsensoranordnung nach einem der Ansprüche 1 bis 9,
wobei die Ultraschallmembran (5) an dem Blendenabschnitt (3) anliegt.

11. Ultraschallsensoranordnung nach einem der Ansprüche 1 bis 9,
wobei die Ultraschallmembran (5) und der Blendenabschnitt (3) mechanisch entkoppelt sind.

12. Ultraschallsensoranordnung nach Anspruch 11,
wobei zwischen der Ultraschallmembran (5) und dem Blendenabschnitt (3) ein Luftspalt (15) ausgebildet ist.

13. Kraftfahrzeug (16) mit mindestens einer Ultraschallsensoranordnung nach einem der Ansprüche 1 bis 12.

14. Kraftfahrzeug mit mindestens einer Ultraschallsensoranordnung (1) nach einem der Ansprüche 6 bis 9,
wobei das Formteil (13) einen Abschnitt einer Außenhaut des Kraftfahrzeugs (16) bildet und der Ultraschallsensor (2) dergestalt auf einer einem Fahrzeuginneren zugewandten Seite des Formteils (13) an dem Formteil (13) angebracht ist, dass die von dem Blendenabschnitt (3) des Formteils (13) verdeckte Ultraschallmembran (5) in Bezug auf das Kraftfahrzeug (16) nach außen weist.

15. Kraftfahrzeug mit mindestens einer Ultraschallsensoranordnung (1) nach einem der Ansprüche 6 bis 9,
wobei das Formteil (13) ein im Fahrzeuginneren bereitgestelltes Formteil (13) ist und der Ultraschallsensor (2) dergestalt auf einer in Bezug auf das Kraftfahrzeug (16) nach außen weisenden Seite des Formteils (13) an dem Formteil (13) angebracht ist, dass die von dem Blendenabschnitt (3) des Formteils (13) verdeckte Ultraschallmembran (5) ins Fahrzeuginnere weist.

## Claims

1. Ultrasonic sensor assembly (1) for a motor vehicle (16), comprising:
an ultrasonic sensor (2) having a housing (4), an ultrasonic membrane (5) mechanically decoupled from the housing (4), and a sound transducer element (7) for exciting vibrations and detecting vibrations of the ultrasonic membrane (5) and
a screen section (3) arranged in front of the ultrasonic membrane (5) and made of an acoustic metamaterial,
**characterized in that**
the acoustic metamaterial is formed from an acoustically hard base material in which a lattice of a plurality of through-openings (24) is formed.

2. Ultrasonic sensor assembly according to Claim 1, wherein the acoustic metamaterial is a broadband acoustic metamaterial which can be tunnelled by ultrasonic waves in a non-resonant manner, at least in an incidence angle range.

3. Ultrasonic sensor assembly according to Claim 1 or 2,
wherein a diameter of each through-opening (24) is smaller than a wavelength of the ultrasonic waves to be emitted and received by the ultrasonic membrane (5).

4. Ultrasonic sensor assembly according to Claim 3,
wherein a distance between two adjacent through-openings (24) of the lattice is greater than the diameter of the through-openings (24) and less than the wavelength of the ultrasonic waves to be emitted and received by the ultrasonic membrane (5).

5. Ultrasonic sensor assembly according to any one of Claims 1 to 4,
**characterized in that**
the through-openings are filled with a filler material that differs from the base material.

6. Ultrasonic sensor assembly according to any one of Claims 1 to 5, further comprising:
a shaped part (13), on which the ultrasonic sensor (2) is mounted in such a way that the ultrasonic membrane (5) faces the shaped part (13), and
the shaped part (13) comprises the screen section (13) of the acoustic metamaterial, in a section in front of the ultrasonic membrane (5).

7. Ultrasonic sensor assembly according to Claim 6, wherein the ultrasonic sensor (2) is mounted on the shaped part (13) by an outer wall of the housing (4) of the ultrasonic sensor (2) being connected to a bracket (14) and the bracket (14) being fastened to the shaped part (13) in a region outside the screen section (3), wherein a surface of the ultrasonic membrane (5) is arranged parallel to the shaped part (13) behind the screen section (3) of the shaped part (13).

8. Ultrasonic sensor assembly according to Claim 6 or 7,
wherein the shaped part (13) is a vehicle body shaped part (18, 19, 20).

9. Ultrasonic sensor assembly according to any one of Claims 6 to 8,
wherein the shaped part is a vehicle body panel (18, 19, 20), a bumper (17, 21), a lower shell of a vehicle wing mirror (22), a privacy screen, or a vehicle interior panelling.

10. Ultrasonic sensor assembly according to any one of Claims 1 to 9,
wherein the ultrasonic membrane (5) is in contact with the screen section (3).

11. Ultrasonic sensor assembly according to any one of Claims 1 to 9,
wherein the ultrasonic membrane (5) and the screen section (3) are mechanically decoupled.

12. Ultrasonic sensor assembly according to Claim 11, wherein an air gap (15) is formed between the ultrasonic membrane (5) and the screen section (3).

13. Motor vehicle (16) having at least one ultrasonic sensor assembly according to any one of Claims 1 to 12.

14. Motor vehicle having at least one ultrasonic sensor assembly (1) according to any one of Claims 6 to 9, wherein the shaped part (13) forms a portion of an outer skin of the motor vehicle (16) and the ultrasonic sensor (2) is mounted on the shaped part (13) on a side of the shaped part (13) facing a vehicle interior, in such a way that the ultrasonic membrane (5) covered by the screen section (3) of the shaped part (13) faces outward with respect to the motor vehicle (16).

15. Motor vehicle having at least one ultrasonic sensor assembly (1) according to any one of Claims 6 to 9, wherein the shaped part (13) is a shaped part (13) provided in the vehicle interior and the ultrasonic sensor (2) is mounted on the shaped part (13) on a side of the shaped part (13) facing outward with respect to the motor vehicle (16), in such a way that the ultrasonic membrane (5) covered by the screen section (3) of the shaped part (13) faces into the vehicle interior.

## Revendications

1. Arrangement capteur à ultrasons (1) pour un véhicule automobile (16), comprenant :
un capteur à ultrasons (2) pourvu d'un boîtier (4), d'une membrane à ultrasons (5) découplée mécaniquement du boîtier (4) et d'un élément transducteur acoustique (7) destiné à exciter en oscillations et à détecter les oscillations de la membrane à ultrasons (5) et
une portion formant écran (3), constituée d'un métamatériau acoustique, disposée devant la membrane à ultrasons (5),
**caractérisé en ce que**
le métamatériau acoustique est constitué d'un matériau de base réverbérant dans lequel est formée une grille composée de plusieurs ouvertures de passage (24).

2. Arrangement capteur à ultrasons selon la revendication 1,
le métamatériau acoustique étant un métamatériau acoustique à large bande qui peut être traversé par effet tunnel de manière non résonante par des ondes ultrasonores dans au moins une plage d'angles d'incidence.

3. Arrangement capteur à ultrasons selon la revendication 1 ou 2,
un diamètre d'une ouverture de passage (24) respective étant inférieur à une longueur d'onde des ondes ultrasonores à émettre et à recevoir par la membrane à ultrasons (5).

4. Arrangement capteur à ultrasons selon la revendication 3,
une distance entre deux ouvertures de passage (24) voisines de la grille étant supérieure au diamètre des ouvertures de passage (24) et inférieure à la longueur d'onde des ondes ultrasonores à émettre et à recevoir par la membrane à ultrasons (5).

5. Arrangement capteur à ultrasons selon l'une des revendications 1 à 4,
**caractérisé en ce que**
les ouvertures de passage sont remplies d'un matériau de remplissage différent du matériau de base.

6. Arrangement capteur à ultrasons selon l'une des revendications 1 à 5, comprenant en outre :
une pièce moulée (13), sur laquelle le capteur à ultrasons (2) est monté de telle sorte que la membrane à ultrasons (5) soit tournée vers la pièce moulée (13), et
la pièce moulée (13) comprend la portion formant écran (13) en métamatériau acoustique dans une portion située devant la membrane à ultrasons (5).

7. Arrangement capteur à ultrasons selon la revendication 6,
le capteur à ultrasons (2) étant monté sur la pièce moulée (13) en ce qu'une paroi extérieure du boîtier (4) du capteur à ultrasons (2) est reliée à un support (14) et le support (14) est fixé à la pièce moulée (13) dans une zone située à l'extérieur de la portion formant écran (3),
une surface de la membrane à ultrasons (5) étant disposée parallèlement à la pièce moulée (13) derrière la portion formant écran (3) de la pièce moulée (13).

8. Arrangement capteur à ultrasons selon la revendication 6 ou 7,
la pièce moulée (13) étant une pièce moulée de carrosserie (18, 19, 20).

9. Arrangement capteur à ultrasons selon l'une des revendications 6 à 8,
la pièce moulée étant une tôle de carrosserie (18, 19, 20), un pare-chocs (17, 21), une coque inférieure d'un rétroviseur latéral de véhicule (22), un écran de protection visuelle ou un habillage intérieur de véhicule.

10. Arrangement capteur à ultrasons selon l'une des revendications 1 à 9,
la membrane à ultrasons (5) reposant contre la portion formant écran (3).

11. Arrangement capteur à ultrasons selon l'une des revendications 1 à 9,
la membrane à ultrasons (5) et la portion formant écran (3) étant découplées mécaniquement.

12. Arrangement capteur à ultrasons selon la revendication 11,
un entrefer (15) étant formé entre la membrane à ultrasons (5) et la portion formant écran (3).

13. Véhicule automobile (16) comprenant au moins un arrangement capteur à ultrasons selon l'une des revendications 1 à 12.

14. Véhicule automobile comprenant au moins un arrangement capteur à ultrasons (1) selon l'une des revendications 6 à 9,
la pièce moulée (13) formant une portion d'une enveloppe extérieure du véhicule automobile (16) et le capteur à ultrasons (2) étant monté sur la pièce moulée (13), sur un côté de la pièce moulée (13) qui fait face à l'intérieur du véhicule de telle sorte que la membrane à ultrasons (5) recouverte par la portion formant écran (3) de la pièce moulée (13) soit dirigée vers l'extérieur par rapport au véhicule automobile (16).

15. Véhicule automobile comprenant au moins un arrangement capteur à ultrasons (1) selon l'une des revendications 6 à 9,
la pièce moulée (13) étant une pièce moulée (13) fournie à l'intérieur du véhicule et le capteur à ultrasons (2) étant monté sur la pièce moulée (13), sur un côté de la pièce moulée (13) qui fait face à l'extérieur par rapport au véhicule automobile (16), de telle sorte que la membrane à ultrasons (5) non recouverte par la portion formant écran (3) de la pièce moulée (13) soit dirigée vers l'intérieur du véhicule.
